# EUROPEAN PATENT APPLICATION

(11) **EP 4 756 398 A1**
(43) Date of publication of application: **10.06.2026**
(21) Application number: 24801069.6
(22) Date of filing: 07.05.2024
(51) Int. Cl.: G01M 3/26

(54) **LEAKAGE DETECTION DEVICE AND DETECTION METHOD**

(30) Priority: 28.07.2023 CN 202310951667
(71) Applicant: Wuxi Lead Intelligent Equipment Co., Ltd., Wuxi, Jiangsu 214028 (CN)
(72) Inventor: WANG, Mingsheng, Wuxi, Jiangsu 214028 (CN)
(74) Representative: Rau, Schneck & Hübner Patentanwälte Rechtsanwälte PartGmbB
(86) International application number: PCT/CN2024/091512
(87) International publication number: WO 2025/025723

(57) **Abstract**

Disclosed is a leakage detecting device and a detecting method. The leakage detecting device comprises: a detecting bin having a cavity, the detecting bin being provided thereon with a material-loading port which is in communication with the cavity, and the detecting bin being further provided thereon with a blocking component for opening or blocking the material-loading port, the material-loading port being configured for enabling a piece to be detected to be placed into the cavity or enabling it to be taken out of the cavity; a vacuum generator being in communication with the cavity, a first switch valve being connected between the vacuum generator and the detecting bin; a clean gas generator being in communication with the cavity, a second switch valve being connected between the clean gas generator and the detecting bin; a leakage detector being in communication with the cavity, a third switch valve being connected between the leakage detector and the detecting bin and configured for enabling the leakage detector to be in communication with or disconnect from the cavity, the leakage detector being configured for detecting gas composition in the cavity.

## Description

### CROSS-REFERENCE TO RELATED APPLICATIONS

The present disclosure claims priority to a Chinese patent application No. 202310951667.9 filed with the CNIPA on July 28, 2023 and entitled "LEAKAGE DETECTING DEVICE AND DETECTING METHOD", which is hereby incorporated by reference in its entirety.

### TECHNICAL FIELD

The present disclosure relates to the technical field of leakage detection, and particularly to a leakage detecting device and a detecting method.

### BACKGROUND

In a lithium battery production line, it is necessary to detect leakage of a lithium battery after liquid injection and packaging, so as to ensure that the lithium battery meets factory requirements. When the lithium battery is not tightly packaged, the electrolyte injected into the lithium battery will leak out of the lithium battery, which seriously influences the performance of the lithium battery, and therefore it is very important to detect the leakage of the lithium battery.

A leakage detector, as an electronic component capable of detecting the composition of gases, can theoretically be utilized to detect if there is a leakage in the lithium battery. However, since leakage of lithium battery usually occurs in a vacuum environment while existing leakage detectors can only be used in non-vacuum environments, such leakage detectors are not appropriate for detecting the leakage of the lithium battery.

### SUMMARY

The present disclosure discloses a leakage detecting device and a detecting method, which may detect the leakage of the lithium battery.

To achieve the above objective, in a first aspect, the present disclosure discloses a leakage detecting device, comprising:
a detecting bin having a cavity, the detecting bin being provided thereon with a material-loading port which is in communication with the cavity, and the detecting bin being further provided thereon with a blocking component for opening or blocking the material-loading port, the material-loading port being configured for enabling a piece to be detected to be placed into the cavity or enabling it to be taken out of the cavity;
a vacuum generator being in communication with the cavity, a first switch valve being connected between the vacuum generator and the detecting bin and configured for enabling the vacuum generator to be in communication with or disconnect from the cavity, the vacuum generator being configured for extracting gas from the cavity;
a clean gas generator being in communication with the cavity, a second switch valve being connected between the clean gas generator and the detecting bin and configured for enabling the clean gas generator to be in communication with or disconnect from the cavity, the clean gas generator being configured for delivering clean gas to the cavity;
a leakage detector being in communication with the cavity, a third switch valve being connected between the leakage detector and the detecting bin and configured for enabling the leakage detector to be in communication with or disconnect from the cavity, the leakage detector being configured for detecting gas composition in the cavity.

When detecting the leakage of the piece to be detected by means of the leakage detecting device, firstly a vacuum environment is created in the cavity by means of the vacuum generator so that the gas inside the piece to be detected leaks into the cavity; then the clean gas generator is used to deliver clean gas to the cavity, so that the cavity gradually changes from a vacuum environment to a non-vacuum environment; finally, the gas in the cavity is extracted by the leakage detector to detect gas composition in the cavity. In this way, although the leakage of the piece to be detected was occurred in a vacuum environment, the cavity is a non-vacuum environment when the leakage detector is detecting gas composition in the cavity, and the leakage detector can be used in the non-vacuum environment. Therefore, it is possible to enable the leakage detector to detect the leakage of the piece to be detected, improving adaptability of the leakage detector.

Optionally, the leakage detecting device further comprises:
a pressure detecting element being in communication with the cavity and configured for detecting gas pressure in the cavity.

Since the pressure detecting element is in communication with the cavity, the pressure detecting element may monitor the gas pressure in the cavity in real time, and then the vacuum generator may control the time length of extracting the gas in the cavity according to the gas pressure, making the gas pressure in the cavity more controllable.

Optionally, the pressure detecting element is connected between the third switch valve and the detecting bin, and is in communication with the third switch valve and the cavity respectively.

By making the pressure detecting element connected between the third switch valve and the detecting bin and be in communication with the third switch valve and the cavity respectively, it is possible to arrange the pressure detecting element, the third switch valve, and the cavity in the same gas path. In this way, on the one hand, it is possible to regularize the gas path layout of the whole leakage detecting device, and on the other hand, there is no need to provide an additional separate opening for communication with the pressure detecting element on the detecting bin, thus rendering the structure of the detecting bin more concise.

Optionally, the leakage detecting device further comprises:
a pipeline cleaning valve comprising a first pipeline cleaning port, a second pipeline cleaning port and a third pipeline cleaning port and being configured for enabling the second pipeline cleaning port to be in communication with the first pipeline cleaning port or the third pipeline cleaning port respectively;
the first pipeline cleaning port is in communication with the clean gas generator, the second pipeline cleaning port is in communication with the third switch valve, and the third pipeline cleaning port is in communication with the leakage detector.

When the leakage detecting device further comprises a pipeline cleaning valve, by switching the communication state of each cleaning port in the pipeline cleaning valve, specifically, by enabling the second pipeline cleaning port to be in communication with the third pipeline cleaning port, it is possible for the detecting device to realize leakage detection of the piece to be detected; in addition, by enabling the second pipeline cleaning port to be in communication with the first pipeline cleaning port, it is possible to realize cleaning of the gas path. That is, it is possible to realize cleaning of the gas path while realizing leakage detection of the piece to be detected, achieving functional diversity.

Optionally, the leakage detecting device further comprises:
a check valve being connected between the first pipeline cleaning port and the clean gas generator and being in communication with the first pipeline cleaning port and the clean gas generator respectively, a flow direction of gas in the check valve being configured as a direction from the clean gas generator to the first pipeline cleaning port.

By connecting the check valve between the first pipeline cleaning port and the clean gas generator, and configuring the flow direction of the gas in the check valve as a direction from the clean gas generator to the first pipeline cleaning port, it is possible to prevent the gas in the gas path between the pipeline cleaning valve and the cavity from entering the gas path between the pipeline cleaning valve and the clean gas generator and flowing to the clean gas generator, so as to prevent contamination of the gas path between the pipeline cleaning valve and the clean gas generator.

Optionally, the leakage detecting device further comprises:
a relay valve, the relay valve being connected between the third switch valve and the pipeline cleaning valve and configured for enabling the third switch valve to be in communication with or disconnect from the second pipeline cleaning port.

By providing the relay valve between the third switch valve and the pipeline cleaning valve, since the relay valve enables the third switch valve to be in communication with or disconnect from the second pipeline cleaning port, connection or disconnection of the gas path between the third switch valve and the second pipeline cleaning port may be controlled by the relay valve, which is very flexible, improving the controllability of the gas path between the third switch valve and the second pipeline cleaning port, and when the third switch valve is abnormal and cannot be disconnected, the relay valve may also substitute for the third switch valve, increasing reliability of the leakage detecting device.

Optionally:
the relay valve comprises a first relay port, a second relay port, and a third relay port, the relay valve is configured for enabling the second relay port to be in communication with the first relay port or the third relay port respectively, and the second relay port is in communication with the second pipeline cleaning port;
the leakage detecting device further comprises an instrument cleaning valve, the instrument cleaning valve comprises a first instrument cleaning port, a second instrument cleaning port and a third instrument cleaning port, the instrument cleaning valve is configured for enabling the second instrument cleaning port to be in communication with the first instrument cleaning port or the third instrument cleaning port respectively, the first instrument cleaning port is in communication with the leakage detector, the second instrument cleaning port is in communication with the clean gas generator, and the third instrument cleaning port is in communication with the third relay port.

By enabling the second instrument cleaning port of the instrument cleaning valve to be in communication with the first instrument cleaning port of the same, and enabling the second pipeline cleaning port of the pipeline cleaning valve to be in communication with the third pipeline cleaning port of the same, since the first instrument cleaning port is in communication with the leakage detector and the second instrument cleaning port is in communication with the clean gas generator, when the clean gas generator starts to deliver the clean gas, the clean gas may clean the leakage detector along a path through the clean gas generator, the second instrument cleaning port, the first instrument cleaning port and the leakage detector, and thus it is possible to prevent gas leaked from the piece to be detected from remaining in the leakage detector and influencing accuracy of the next detection.

Optionally, the first instrument cleaning port is further in communication with the third pipeline cleaning port.

By further enabling the first instrument cleaning port to be in communication with the third pipeline cleaning port, when the clean gas generator starts to deliver the clean gas, the clean gas may further clean the gas path along a path through the clean gas generator, the second instrument cleaning port, the first instrument cleaning port, the third pipeline cleaning port, the second pipeline cleaning port, the second relay port, the first relay port, the third switch valve and the cavity, thereby making the gas path cleaner.

Optionally, an electric proportional valve is in communication with the clean gas generator and the second instrument cleaning port and is connected therebetween.

By connecting the electric proportional valve between the clean gas generator and the second instrument cleaning port, since the electric proportional valve is in the gas path where the clean gas generator and the leakage detector are located and thus may adjust the gas flow when cleaning the leakage detector, the clean gas generator may better clean the leakage detector.

Optionally, an electric proportional valve is connected between the second switch valve and the clean gas generator.

By connecting the electric proportional valve between the second switch valve and the clean gas generator, since the electric proportional valve is in the gas path where the clean gas generator and the cavity are located, it is thus possible to adjust the gas flow when delivering the clean gas to the cavity, improving controllability of the leakage detecting device.

In a second aspect, the present disclosure discloses a leakage detecting method, and the method is implemented based on the leakage detecting device of any one in the first aspect, and comprises:
placing the piece to be detected into the cavity through the material-loading port;
blocking the material-loading port by means of the blocking component, enabling the vacuum generator to be in communication with the cavity by means of the first switch valve, disconnecting the clean gas generator from the cavity by means of the second switch valve, and disconnecting the leakage detector from the cavity by means of the third switch valve;
extracting gas from the cavity to create a vacuum environment therein by using the vacuum generator;
disconnecting the vacuum generator from the cavity by means of the first switch valve, and enabling the clean gas generator to be in communication with the cavity by means of the second switch valve, so as to deliver clean gas to the cavity by means of the clean gas generator until a non-vacuum environment is created in the cavity;
enabling the leakage detector to be in communication with the cavity by means of the third switch valve so as to enable the leakage detector to detect gas composition in the cavity.

Optionally, after said "disconnecting the vacuum generator from the cavity by means of the first switch valve", and before said "enabling the clean gas generator to be in communication with the cavity by means of the second switch valve", the method further comprises:
keeping the cavity in quiescence for a preset time period so that the vacuum environment in the cavity is maintained for the preset time period.

Optionally, after said "enabling the leakage detector to be in communication with the cavity by means of the third switch valve so as to enable the leakage detector to detect gas composition in the cavity", the method further comprises:
if the leakage detector confirms leakage of the piece to be detected according to gas composition, then opening the material-loading port, and enabling the second pipeline cleaning port of the pipeline cleaning valve to be in communication with the first pipeline cleaning port; and
delivering clean gas to the cavity through the first pipeline cleaning port, the second pipeline cleaning port and the third switch valve sequentially by means of the clean gas generator, so as to clean a gas path between the pipeline cleaning valve and the cavity through the clean gas.

Compared with the prior art, the present disclosure provides the following beneficial effects:
in the present disclosure, when detecting the leakage of the piece to be detected by means of the leakage detecting device, firstly a vacuum environment is created in the cavity by means of the vacuum generator so that the gas inside the piece to be detected leaks into the cavity; then the clean gas generator is used to deliver clean gas to the cavity, so that the cavity gradually changes from a vacuum environment to a non-vacuum environment; finally, the gas in the cavity is extracted by the leakage detector to detect gas composition in the cavity. In this way, although the leakage of the piece to be detected was occurred in a vacuum environment, the cavity is a non-vacuum environment when the leakage detector is detecting gas composition in the cavity, and the leakage detector can be used in the non-vacuum environment. Therefore, it is possible to enable the leakage detector to detect the leakage of the piece to be detected, improving adaptability of the leakage detector.

Based on this, when the piece to be detected is a lithium battery, in the case of a vacuum environment, if the lithium battery is not tightly packaged, the electrolyte gas inside the lithium battery will slowly leak from the interior of the piece to be detected into the cavity, so that there is electrolyte gas leaked from the lithium battery in the cavity. If the piece to be detected is tightly packaged, the gas inside the lithium battery will not leak from the inside of the lithium battery into the cavity, and the electrolyte gas leaking from the lithium battery will of course not be present in the cavity. Therefore, the leakage detector can confirm whether the lithium battery leaks by detecting whether there is electrolyte gas in the cavity, that is, the leakage detector may detect the leakage of the lithium battery.

### BRIEF DESCRIPTION OF THE DRAWINGS

In order to more clearly illustrate embodiments of the present application or technical solutions in the prior art, accompanying drawings that need to be used in description of the embodiments or the prior art will be briefly introduced as follows. Obviously, drawings in following description are only the embodiments of the present application. For those skilled in the art, other drawings can also be obtained according to the disclosed drawings without creative efforts.
FIG. 1 is a structural schematic diagram of a first kind of a leakage detecting device provided by an embodiment of the present disclosure;
FIG. 2 is a structural schematic diagram of a second kind of a leakage detecting device provided by an embodiment of the present disclosure;
FIG. 3 is a structural schematic diagram of a third kind of a leakage detecting device provided by an embodiment of the present disclosure;
FIG. 4 is a structural schematic diagram of a fourth kind of a leakage detecting device provided by an embodiment of the present disclosure;
FIG. 5 is a structural schematic diagram of a fifth kind of a leakage detecting device provided by an embodiment of the present disclosure;
FIG. 6 is a structural schematic diagram of a sixth kind of a leakage detecting device provided by an embodiment of the present disclosure;
FIG. 7 is a structural schematic diagram of a seventh kind of a leakage detecting device provided by an embodiment of the present disclosure;
FIG. 8 is a structural schematic diagram of an eighth kind of a leakage detecting device provided by an embodiment of the present disclosure;
FIG. 9 is a flow diagram of a leakage detecting method provided by an embodiment of the present disclosure;
FIG. 10 is a flow diagram of another leakage detecting method provided by an embodiment of the present disclosure.

Description of reference signs:
10-detecting bin; 101-cavity; 102-material-loading port; 103-blocking component;
11-vacuum generator;
12-first switch valve;
13-clean gas generator;
14-second switch valve;
15-leakage detector;
16-third switch valve;
17-pressure detecting element;
18-pipeline cleaning valve; 181-first pipeline cleaning port; 182-second pipeline cleaning port; 183-third pipeline cleaning port;
19-check valve;
20-relay valve; 201-first relay port; 202-second relay port; 203-third relay port;
21-instrument cleaning valve; 211-first instrument cleaning port; 212-second instrument cleaning port; 213-third instrument cleaning port;
22-electric proportional valve;
100-leakage detecting device.

### DETAILED DESCRIPTION

The technical solutions in the embodiments of the present application will be clearly and completely described below in conjunction with the accompanying drawings in the embodiments of the present application. Obviously, the described embodiments are only a part of the embodiments of the present application, and not all of them. Based on the embodiments in the present application, all other embodiments obtained by a person of ordinary skill in the art without making creative labor fall within the scope of protection of the present application.

In the present disclosure, terms "up", "down", "left", "right", "front", "back", "top", "bottom", "inside", "outside", "middle", "vertical", "horizontal", "transverse", and "longitudinal" are used to indicate directions or positional relationships based on the orientation or position shown in the drawings. These terms are primarily used to better describe the present disclosure and its embodiments, and are not intended to limit the indicated devices, components, or parts to having specific orientations, or to be constructed and operated in specific orientations.

Moreover, a portion of the above terms, in addition to indicating orientations or positional relationships, may also be used to represent other meanings. For instance, the term "up" could, in certain contexts, also denote a relationship of attachment or connection. For a person skilled in the art, the specific meaning of these terms in the present disclosure may be understood based on the particular circumstances.

In addition, terms "mounted", "set", "provided", "be connected with", and "be connected to" should be interpreted in a broad sense. For example, it can be a fixed connection, a detachable connection, or an integrated configuration; it can be a mechanical connection or an electrical connection; it can be a direct connection or an indirect connection through an intermediate medium; alternatively, it may be an interaction relationship between the two devices, elements and components. For those of ordinary skill in the art, the specific meanings of the above terms in the present disclosure can be understood according to specific situations.

Furthermore, the terms "first", "second", and the like are used primarily to distinguish between different devices, elements, or components (which may be the same or different in particular type and configuration), and are not intended to state or imply the relative importance or number of the indicated devices, elements, or components. Unless otherwise specified, "a plurality" means two or more.

The technical solutions of the present disclosure will be further described below in connection with specific embodiments and the accompanying drawings.

### The First Embodiment

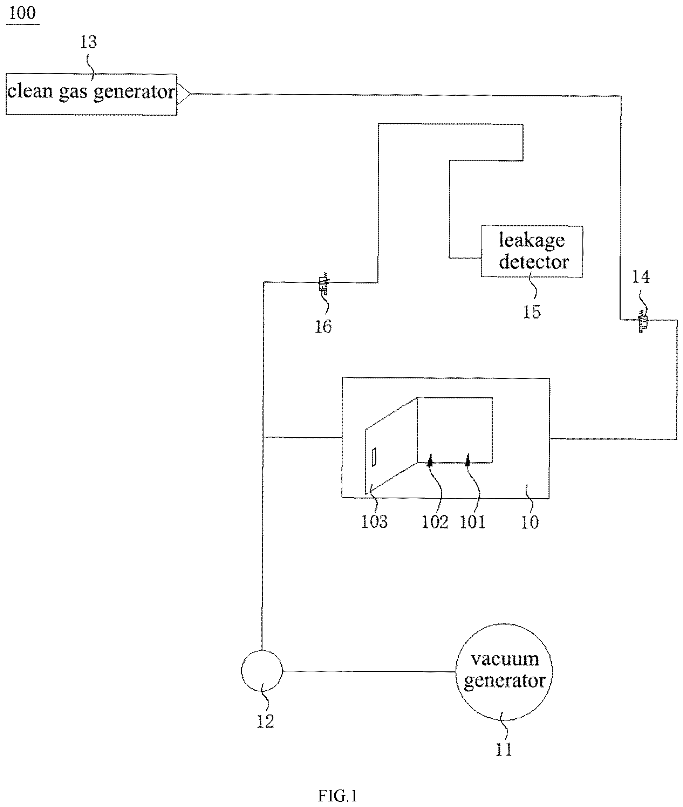

FIG. 1 is a structural schematic diagram of a first kind of a leakage detecting device provided by an embodiment of the present disclosure.

See FIG. 1, the leakage detecting device 100 comprises: a detecting bin 10, a vacuum generator 11, a clean gas generator 13 and a leakage detector 15. Wherein, the detecting bin 10 has a cavity 101, and is provided with a material-loading port 102, which is in communication with the cavity 101, and with a blocking component 103 for opening or blocking the material-loading port 102. The material-loading port 102 is configured for enabling a piece to be detected to be placed into the cavity 101 or enabling it to be taken out of the cavity 101. The vacuum generator 11 is in communication with the cavity 101. A first switch valve 12 is connected between the vacuum generator 11 and the detecting bin 10, and is configured for enabling the vacuum generator 11 to be in communication with or disconnect from the cavity 101, and the vacuum generator 11 being configured for extracting gas from the cavity 101.

The clean gas generator 13 is in communication with the cavity 101. A second switch valve 14 is connected between the clean gas generator 13 and the detecting bin 10, and is configured for enabling the clean gas generator 13 to be in communication with or disconnect from the cavity 101, and the clean gas generator 13 is configured for delivering clean gas to the cavity 101. The leakage detector 15 is in communication with the cavity 101. A third switch valve 16 is connected between the leakage detector 15 and the detecting bin 10, and is configured for enabling the leakage detector 15 to be in communication with or disconnect from the cavity 101, and the leakage detector 15 is configured for detecting gas composition in the cavity 101.

In an embodiment of the present disclosure, when detecting leakage of the piece to be detected by using the leakage detecting device 100, firstly, the blocking component 103 may open the material-loading port 102 on the detecting bin 10, and then the piece to be detected may be placed into the cavity 101 of the detecting bin 10; next, the blocking component 103 may block the material-loading port 102 on the detecting bin 10.

After the blocking component 103 blocked the material-loading port 102 on the detecting bin 10, since the first switch valve 12 is connected between the vacuum generator 11 and the detecting bin 10, the second switch valve 14 is connected between the clean gas generator 13 and the detecting bin 10, and the third switch valve 16 is connected between the leakage detector 15 and the detecting bin 10, the vacuum generator 11 may be in communication with the cavity 101 and both the clean gas generator 13 and the leakage detector 15 are disconnected with the cavity 101 only by opening first switch valve 12 and closing the second switch valve 14 and the third switch valve 16 respectively. In this state, when the vacuum generator 11 starts to extract the gas in the cavity 101 and extracts the gas out of the cavity 101, the cavity 101 may gradually reduce its gas pressure to create a vacuum environment.

After the cavity 101 is in a vacuum environment (the gas pressure is about -98Kpa), the first switch valve 12 can be closed and the cavity undergoes pressure retention for a preset time (20s). At this time, if the piece to be detected is not tightly packaged, the gas inside the piece to be detected will slowly leak from the interior of the piece to be detected into the cavity 101, so that there is the gas leaked from the piece to be detected in the cavity 101. If the piece to be detected is tightly packaged, the gas inside the piece to be detected will not leak from the interior of the piece to be detected into the cavity 101, and the electrolyte gas leaking from the piece to be detected will naturally not be present in the cavity 101.

Next, the second switch valve 14 may be opened so that the clean gas generator 13 is in communication with the cavity 101, and then, the clean gas may be delivered to the cavity 101 by means of the clean gas generator 13. As the clean gas gradually enters the cavity 101, the cavity 101 will gradually change from the vacuum environment to the non-vacuum environment (the gas pressure will rise from about -98Kpa to about 8Kpa).

It is to be noted that the above non-vacuum environment should be understood in a broad sense, that is, when the gas pressure in the cavity 101 is greater than the gas pressure when cavity 101 is a vacuum environment, and is within the range of 0Kpa to 150Kpa, it can be considered that the cavity 101 is a non-vacuum environment at this time.

After the cavity 101 changes from the vacuum environment to the non-vacuum environment, the third switch valve 16 may be opened so that the leakage detector 15 is in communication with the cavity 101, and then the gas in the cavity 101 may be extracted by means of the leakage detector 15, so that the gas in the cavity 101 may enter the leakage detector 15, and thus the gas composition in cavity 101 may then be detected by the leakage detector 15. When the leakage detector 15 detects that the gas composition in cavity 101 contains the gas inside the piece to be detected, it is possible to confirm that there is a leak in the piece to be detected, and when the leakage detector 15 detects that the gas composition in the cavity 101 does not contain the gas inside the piece to be detected, it is possible to confirm that there is no leakage in the piece to be detected, that is, it is possible to confirm whether the piece to be detected is leaking, and thus to realize the leak detection of the piece to be detected.

It can be understood that, in order for the leakage detector 15 to be able to confirm whether the piece to be detected is leaking based on the gas composition in the cavity 101, the composition of the clean gas shall be different from that of the gas inside the piece to be detected. In this way, when the leakage detector 15 detects that the gas inside the piece to be detected is contained in the gas compositions in the cavity 101, it is possible to confirm that the leakage has occurred in the piece to be detected.

It can be seen that when detecting the leakage of the piece to be detected by means of the leakage detecting device, firstly a vacuum environment is created in the cavity 101 by means of the vacuum generator so that the gas inside the piece to be detected leaks into the cavity 101; then the clean gas generator is used to deliver clean gas to the cavity 101, so that the cavity 101 gradually changes from a vacuum environment to a non-vacuum environment; finally, the gas in the cavity 101 is extracted by the leakage detector to detect gas composition in the cavity 101. In this way, although the leakage of the piece to be detected was occurred in a vacuum environment, the cavity 101 is a non-vacuum environment when the leakage detector is detecting gas composition in the cavity 101, and the leakage detector can be used in the non-vacuum environment. Therefore, it is possible to enable the leakage detector to detect the leakage of the piece to be detected, improving adaptability of the leakage detector.

Based on this, when the piece to be detected is a lithium battery, in the case that the cavity 101 is a vacuum environment, if the piece to be detected is not tightly packaged, the electrolyte gas inside the piece to be detected will slowly leak from the interior of the piece to be detected into the cavity 101, so that there is electrolyte gas leaked from the piece to be detected presenting in the cavity 101. If the piece to be detected is tightly packaged, the gas inside the piece to be detected will not leak from the interior of the piece to be detected into the cavity 101, and the electrolyte gas leaking from the piece to be detected will naturally not present in the cavity 101. Therefore, the leakage detector may confirm whether the piece to be detected leaks by detecting whether there is electrolyte gas in the cavity 101, that is, the leakage detector may detect the leakage of the piece to be detected.

Here, the piece to be detected as a lithium battery is only one possible interpretation of the embodiments of the present disclosure for the piece to be detected based on a specific application scenario, and of course, the piece to be detected may also be understood as any other possible component that needs to be detected for the leakage, which is not limited in the embodiments of the present disclosure.

It is to be noted that, considering the case where the leakage detector 15 detects the presence of gas inside the piece to be detected in the cavity 101, it is possible that this is caused by the residual gas leaking from the previous piece to be detected such that the detection result is affected by the previous piece to be detected and consequently leads to inaccurate results. In order to avoid this case, before the gas in the cavity 101 is extracted by means of the leakage detector 15 to detect the gas composition in the cavity 101, it is possible to perform the actions of delivering the clean gas to the cavity 101 and extracting the gas in the cavity 101 a plurality of times, respectively, thereby exchanging the gas in the cavity. In this way, it is possible to discharge the residual gas leaked from the previous piece to be detected out of the cavity 101 completely, and thus to prevent the detection from being influenced by the previous piece to be detected, so that the detection result is more accurate.

Here, in the process of exchanging the gas in the cavity, when the gas in the cavity 101 is extracted by means of the vacuum generator 11, it is possible to stop suction after the gas pressure in the cavity 101 is reduced to about -60 Kpa; when the clean gas is delivered to the cavity 101 by means of the clean gas generator 13, it is possible to stop delivering of the clean gas to the cavity 101 after the gas pressure in the cavity 101 rises to about 0 Kpa. In this way, the gas in the cavity may be exchanged more completely.

It should be noted that the above vacuum generator 11 may be a vacuum pump or any possible device capable of generating a vacuum, which is not limited in the embodiment of the present disclosure. The above clean gas generator 13 may be a gas pump or any device capable of generating the clean gas, which is not limited in the embodiment of the present disclosure.

In order to enable the leakage detector 15 to more accurately determine whether the piece to be detected leaks, the leakage detector 15 may extract the gas in the cavity 101 for about 5s. In this way, it is possible for the leakage detector 15 to more accurately determine whether leakage of the piece to be detected has occurred without taking too much time. Of course, the time period for the leakage detector 15 to extract the gas in the cavity 101 may be other time periods, for example, 6s or 7s, which is not limited by the embodiment of the present disclosure.

The above first switch valve 12 may be a ball valve or any other valve capable of enabling the vacuum generator 11 to be in communication with or disconnect from the cavity 101, which is not limited in the embodiment of the present disclosure. Similarly, the structures of the second switch valve 14 and the third switch valve 16 may be the same as that of the first switch valve 12, which will not be repeated in the embodiment of the present disclosure.

The blocking component 103 may be understood as a sealing door or any component capable of blocking or opening the material-loading port 102, which is not limited in the embodiment of the present disclosure.

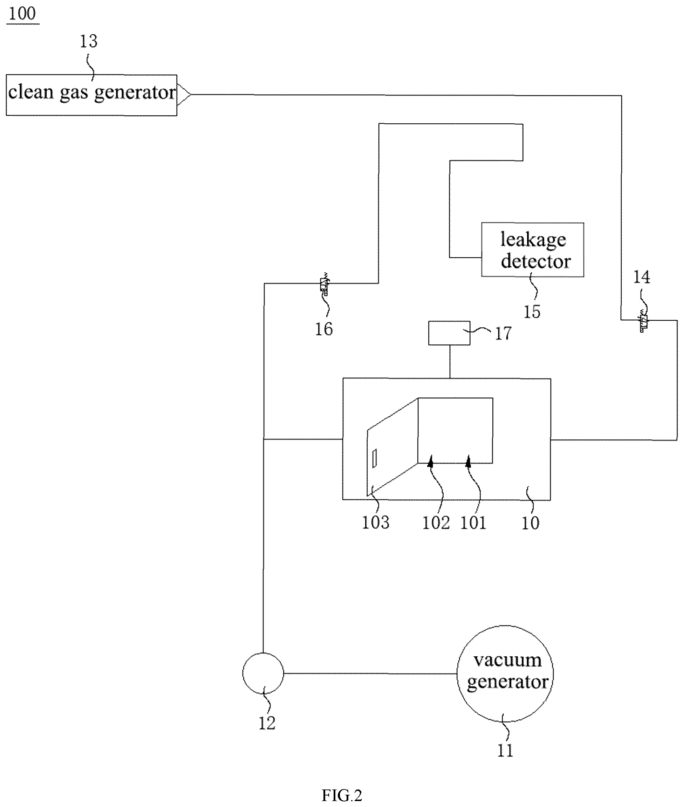

In some embodiments, see FIG. 2, the leakage detecting device further comprises: a pressure detecting element 17, which is in communication with the cavity 101 and is configured for detecting the pressure of a gas in the cavity 101.

Since the pressure detecting element 17 is in communication with the cavity 101, the pressure detecting element 17 may monitor the gas pressure in the cavity 101 in real time, and then the vacuum generator may control the time length of extracting the gas in the cavity 101 according to the gas pressure, making the gas pressure in the cavity 101 more controllable.

Wherein, the above pressure detecting element 17 may be a pressure gauge, or other possible components that may detect the gas pressure in the cavity 101, which is not limited in the embodiments of the present disclosure.

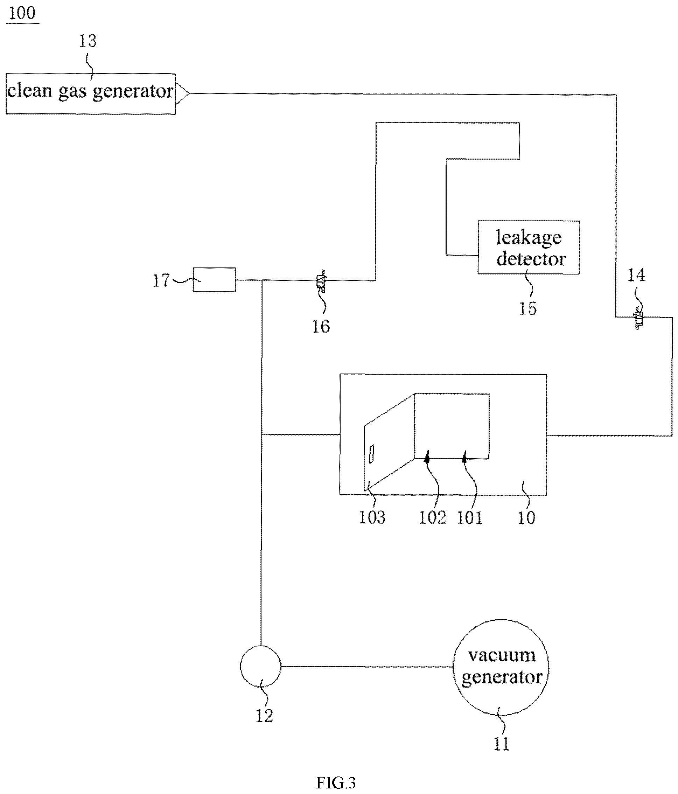

In some embodiments, see FIG. 3, the pressure detecting element 17 is connected between the third switch valve 16 and the detecting bin 10, and is in communication with the third switch valve 16 and the cavity 101 respectively.

By making the pressure detecting element 17 connected between the third switch valve 16 and the detecting bin 10 and be in communication with the third switch valve 16 and the cavity 101 respectively, it is possible to arrange the pressure detecting element 17, the third switch valve 16, and the cavity 101 in the same gas path. In this way, on the one hand, it is possible to regularize the gas path layout of the whole leakage detecting device, and on the other hand, there is no need to provide an additional separate opening for communication with the pressure detecting element 17 on the detecting bin 10, thus rendering the structure of the detecting bin 10 more concise.

When the leakage of the piece to be detected has occurred, there will be gas leaking from the piece to be detected in the cavity 101. At this time, when extracting the gas in the cavity 101 by means of the leakage detector 15, the gas leaking from the piece to be detected will remain in the pipeline between the leakage detector 15 and the cavity 101, so that the gas path between the leakage detector 15 and the cavity 101 will be contaminated, influencing the next use.

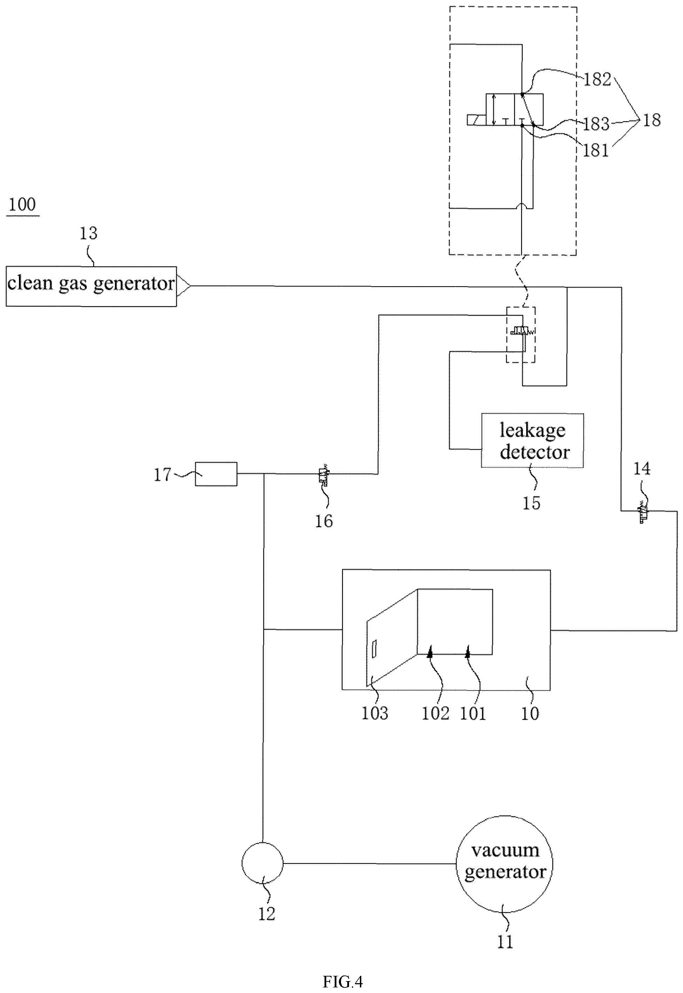

To avoid the above, in some embodiments, referring to FIG. 4, the leakage detecting device further comprises: a pipeline cleaning valve 18, which comprises a first pipeline cleaning port 181, a second pipeline cleaning port 182 and a third pipeline cleaning port 183, and is configured for enabling the second pipeline cleaning port 182 to be in communication with the first pipeline cleaning port 181 or the third pipeline cleaning port 183 respectively. The first pipeline cleaning port 181 is in communication with the clean gas generator, the second pipeline cleaning port 182 is in communication with the third switch valve 16, and the third pipeline cleaning port 183 is in communication with the leakage detector 15.

In the case where the leakage detecting device further comprises the pipeline cleaning valve 18, when the pipeline cleaning valve 18 is in a state where the second pipeline cleaning port 182 is in communication with the third pipeline cleaning port 183, since the second pipeline cleaning port 182 is in communication with the third switch valve 16 and the third pipeline cleaning port 183 is in communication with the leakage detector 15, it is thus possible for the leakage detector 15 to be in communication with the cavity 101 through the third pipeline cleaning port 183, the second pipeline cleaning port 182 and the third switch valve 16 in sequence, and in turn it is possible for the leakage detector 15 to detect the gas composition in the cavity 101 by extracting the gas in the cavity 101, so that the leakage detection of the piece to be detected may be realized.

When the pipeline cleaning valve 18 is switched to a state where the second pipeline cleaning port 182 is in communication with the first pipeline cleaning port 181, since the first pipeline cleaning port 181 is in communication with the clean gas generator 13, it is thus possible for the clean gas generator 13 to be in communication with the cavity 101 through the first pipeline cleaning port 181, the second pipeline cleaning port 182 and the third switch valve 16. In this way, when delivering the clean gas to the cavity 101 by means of the clean gas generator 13 (at this time, ensuring that the material-loading port 102 is opened), the clean gas may pass through the first pipeline cleaning port 181, the second pipeline cleaning port 182 and the third switch valve 16 in sequence into the cavity 101, and it is possible to blow the residual gas in the gas path from the first pipeline cleaning port 181, the second pipeline cleaning port 182, and the third switch valve 16 to cavity 101 into the cavity 101 and discharge it from the material-loading port 102 to the outside of the cavity 101, to play a role of cleaning the gas path between the pipeline cleaning valve 18 and the cavity 101, in turn to make the gas path between the leakage detector 15 and the cavity 101 cleaner to some extent, and thus to avoid or reduce the contamination of the gas path between the leakage detector 15 and the cavity 101 to some extent, so that the next use of the leakage detecting device will not be influenced.

It can be seen that when the leakage detecting device further comprises a pipeline cleaning valve 18, by switching the communication state of each cleaning port in the pipeline cleaning valve 18, specifically, by enabling the second pipeline cleaning port 182 to be in communication with and the third pipeline cleaning port 183, it is possible for the detecting device to realize leakage detection of the piece to be detected, and by enabling the second pipeline cleaning port 182 to be in communication with the first pipeline cleaning port 181, it is possible to realize cleaning of the gas path. That is, it is possible to realize cleaning of the gas path while realizing leakage detection of the piece to be detected, achieving functional diversity.

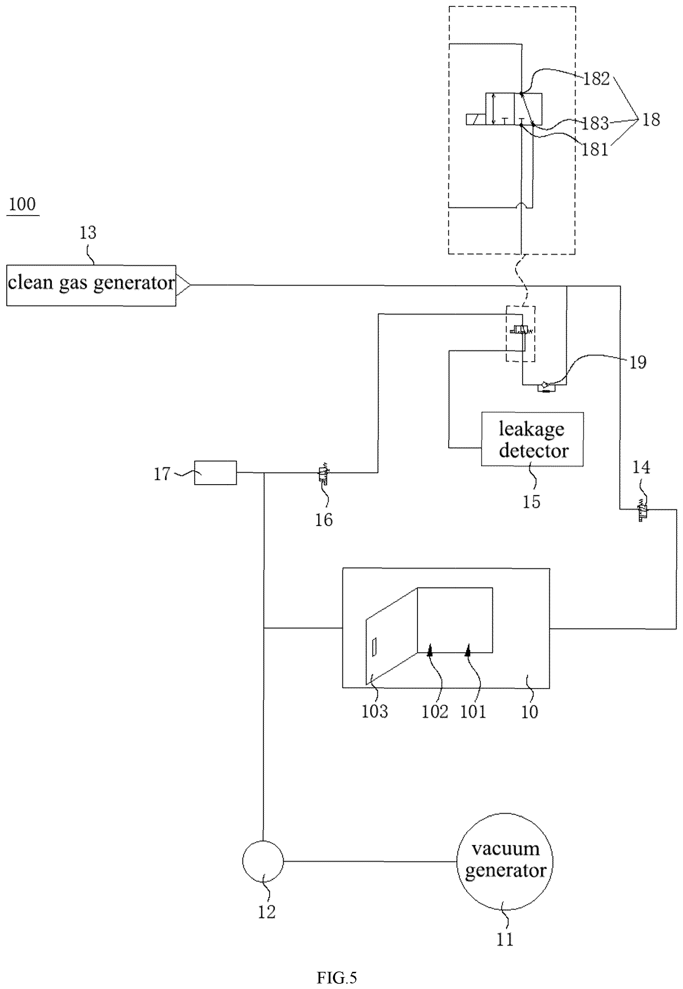

Referring to FIG. 5, to prevent the gas in the gas path between the pipeline cleaning valve 18 and the cavity 101 from entering the gas path between the pipeline cleaning valve 18 and the clean gas generator 13 and flowing to the clean gas generator 13 when the pipeline cleaning valve 18 is switched to the state where the second pipeline cleaning port 182 is in communication with the first pipeline cleaning port 181, in some embodiments, the leakage detecting device further comprises: a check valve 19, which is connected between the first pipeline cleaning port 181 and the clean gas generator 13 and is in communication with the first pipeline cleaning port 181 and the clean gas generator 13 respectively. A flow direction of the gas in the check valve 19 is configured in a direction from the clean gas generator 13 to the first pipeline cleaning port 181.

By enabling the check valve 19 to be connected between the first pipeline cleaning port 181 and the clean gas generator 13, and configuring the flow direction of the gas in the check valve 19 as a direction from the clean gas generator 13 to the first pipeline cleaning port 181, it is possible to prevent the gas in the gas path between the pipeline cleaning valve 18 and the cavity 101 from entering the gas path between the pipeline cleaning valve 18 and the clean gas generator 13 and flowing to the clean gas generator 13, and thus to prevent the gas path between the pipeline cleaning valve 18 and the clean gas generator 13 from being contaminated.

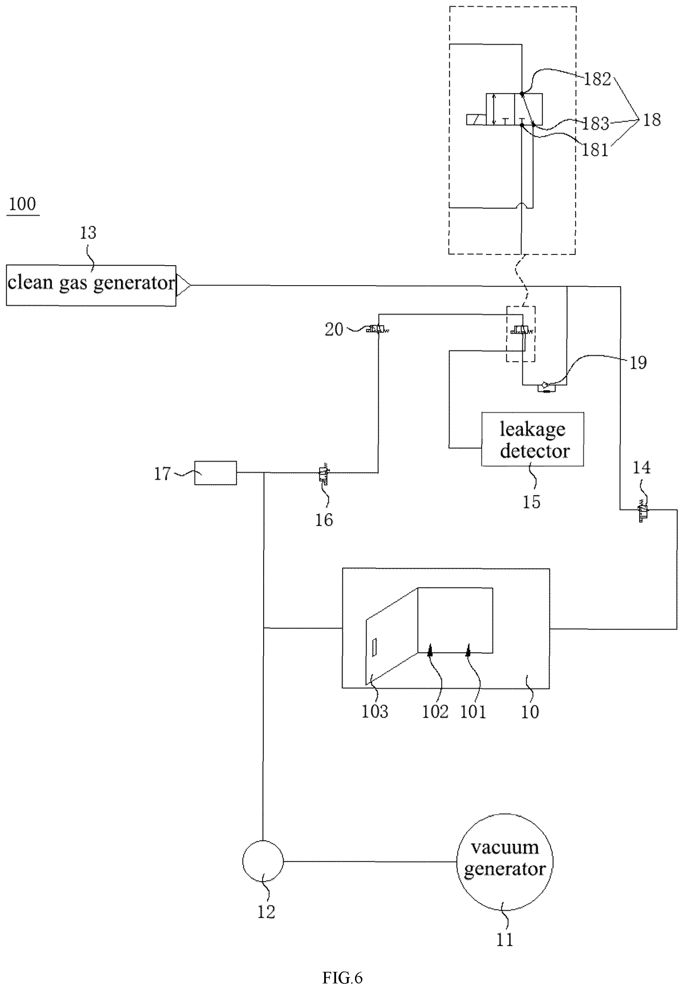

In some embodiments, referring to FIG. 6, the leakage detecting device further includes: a relay valve 20 being connected between the third switch valve 16 and the pipeline cleaning valve 18 and configured for enabling the third switch valve 16 to be in communication with or disconnect from the second pipeline cleaning port 182.

By providing the relay valve 20 between the third switch valve 16 and the pipeline cleaning valve 18, since the relay valve 20 enables the third switch valve 16 to be in communication with or disconnect from the second pipeline cleaning port 182 , connection or disconnection of the gas path between the third switch valve 16 and the second pipeline cleaning port 182 may be controlled by means of the relay valve 20, which is very flexible, improving the controllability of the gas path between the third switch valve 16 and the second pipeline cleaning port 182, and when the third switch valve 16 is abnormal and cannot be disconnected, the leakage detecting device can also be operated more reliably by using the relay valve 20 instead of the third switch valve 16.

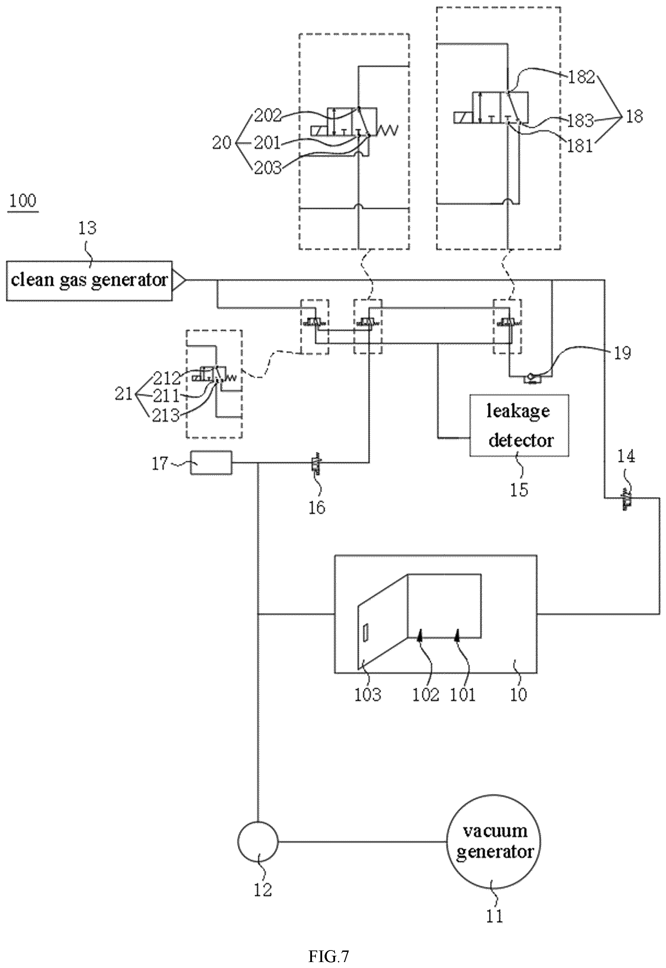

If the leakage detector 15 detects that the leakage of the piece to be detected has occurred, at this time, there will be the gas leaking from the piece to be detected in the leakage detector 15, influencing the accuracy of the next detection. To avoid the above, in some embodiment, referring to FIG. 7, the relay valve 20 comprises a first relay port 201, a second relay port 202, and a third relay port 203, and is configured for enabling the second relay port 202 to be in communication with the first relay port 201 or the third relay port 203 respectively. The second relay port 202 is in communication with the second pipeline cleaning port 182. The leakage detecting device further comprises an instrument cleaning valve 21, which comprises a first instrument cleaning port 211, a second instrument cleaning port 212 and a third instrument cleaning port 213. The instrument cleaning valve 21 is configured for enabling the second instrument cleaning port 212 to be in communication with the first instrument cleaning port 211 or the third instrument cleaning port 213 respectively. The first instrument cleaning port 211 is in communication with the leakage detector 15, the second instrument cleaning port 212 is in communication with the clean gas generator 13, and the third instrument cleaning port 213 is in communication with the third relay port 203.

In this way, by enabling the second instrument cleaning port 212 and the first instrument cleaning port 211 of the instrument cleaning valve 21 to be in communication with each other, and the second pipeline cleaning port 182 and the third pipeline cleaning port 183 of the pipeline cleaning valve 18 to be in communication with each other, since the first instrument cleaning port 211 is in communication with the leakage detector 15 and the second instrument cleaning port 212 is in communication with the clean gas generator 13, when the clean gas generator 13 starts to deliver the clean gas, the clean gas may clean the leakage detector 15 through the path along the clean gas generator 13, the second instrument cleaning port 212, the first instrument cleaning port 211 and the leakage detector 15, and thus it is possible to avoid that the gas leaking from the piece to be detected remains in the leakage detector 15 and influences the accuracy of the next detection.

Further, in some embodiments, referring to FIG. 7, the first instrument cleaning port 211 is further in communication with the third pipeline cleaning port 183. By making the first instrument cleaning port 211 further be in communication with the third pipeline cleaning port 183, when the clean gas generator 13 starts to deliver the clean gas, the clean gas may further clean the gas path through a path along the clean gas generator 13, the second instrument cleaning port 212, the first instrument cleaning port 211, the third pipeline cleaning port 183, the second pipeline cleaning port 182, the second relay port 202, the first relay port 201, the third switch valve 16 and the cavity 101, thereby making the gas path cleaner.

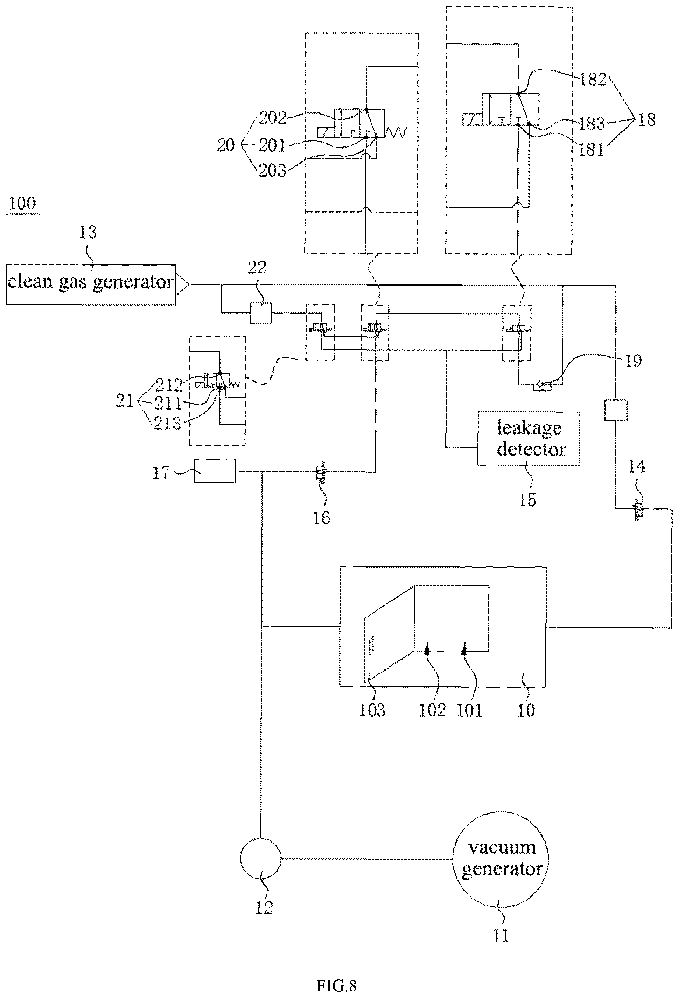

In some embodiments, referring to FIG. 8, an electric proportional valve 22 is in communication with the clean gas generator 13 and the second instrument cleaning port 212 and is connected therebetween.

By connecting the electric proportional valve 22 between the clean gas generator 13 and the second instrument cleaning port 212, since the electric proportional valve 22 is in the gas path where the clean gas generator 13 and the leakage detector 15 are located and thus may adjust the gas flow when cleaning the leakage detector 15, the clean gas generator 13 may better clean the leakage detector 15.

Further, referring to FIG. 8, an electric proportional valve 22 is connected between the second switch valve 14 and the clean gas generator 13. By connecting the electric proportional valve 22 between the second switch valve 14 and the clean gas generator 13, since the electric proportional valve 22 is in the gas path where the clean gas generator 13 and the cavity 101 are located, it is thus possible to adjust the gas flow when delivering the clean gas to the cavity 101, improving the controllability of the leakage detecting device 100.

### The Second Embodiment

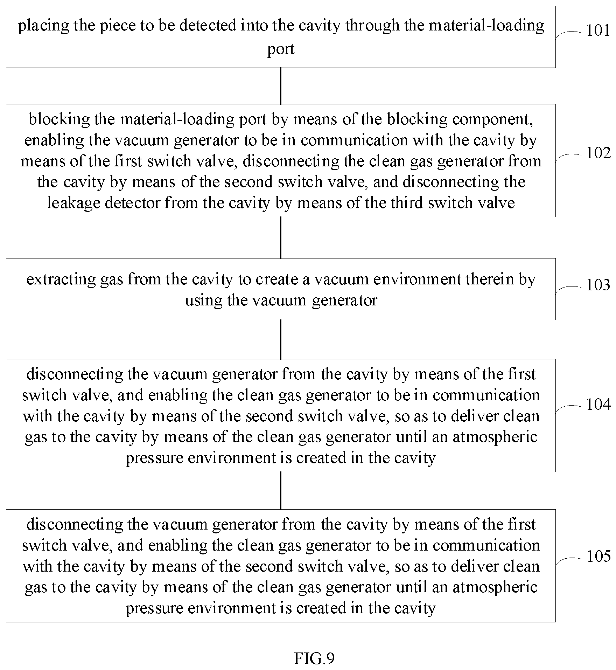

FIG. 9 is a flow diagram of a leakage detecting method provided by an embodiment of the present disclosure.

Referring to FIG. 9, the method may be implemented based on the leakage detecting device of any one in the above first embodiment, and comprise:
Step 101: placing the piece to be detected into the cavity through the material-loading port;
Step 102: blocking the material-loading port by means of the blocking component, enabling the vacuum generator to be in communication with the cavity by means of the first switch valve, disconnecting the clean gas generator from the cavity by means of the second switch valve, and disconnecting the leakage detector from the cavity by means of the third switch valve;
Step 103: extracting gas from the cavity to create a vacuum environment therein by using the vacuum generator;
Step 104: disconnecting the vacuum generator from the cavity by means of the first switch valve, and enabling the clean gas generator to be in communication with the cavity by means of the second switch valve, so as to deliver clean gas to the cavity by means of the clean gas generator until a non-vacuum environment is created in the cavity;
Step 105: enabling the leakage detector to be in communication with the cavity by means of the third switch valve so as to enable the leakage detector to detect gas composition in the cavity.

In the embodiment of the present disclosure, when it is necessary to detect the leakage of the piece to be detected by means of the leakage detecting device, firstly, the piece to be detected may be placed into the cavity through the material-loading port. Next, the blocking component may be used to block the material-loading port, the first switch valve may enable the vacuum generator to be in communication with the cavity, the second switch valve may enable the clean gas generator to be in communication with the cavity, and the third switch valve may disconnect the leakage detector from the cavity. In this way, by enabling the cavity only to be in communication with the vacuum generator, it is possible to prevent the cavity from leaking at other locations.

Then, the vacuum generator may be used to extract the gas from the cavity to create a vacuum environment therein, and when the cavity is a vacuum environment, the pressure in the cavity is small. If the piece to be detected is not packaged tightly, the gas inside the piece to be detected will slowly leak from the interior of the piece to be detected into the cavity, such that there is the gas leaking from piece to be in the cavity.

Next, the first switch valve may be used to disconnect the vacuum generator from the cavity, the second switch valve may connect the clean gas generator to the cavity, and the clean gas generator may be used to deliver the clean gas to the cavity. In the process of delivering the clean gas to the cavity, the gas pressure in the cavity will gradually increase until a non-vacuum environment is created in the cavity.

After creation of the non-vacuum environment in the cavity, the third switch valve may be opened to connect the leakage detector to the cavity, so that the gas in the cavity enters the leakage detector, and thus the gas composition in the cavity may be detected by the leakage detector. When the leakage detector detects that the gas composition in the cavity contains the gas inside the piece to be detected, it can be confirmed the leakage of the piece to be detected has occurred. When the leakage detector detects that the gas in the cavity does not contain the gas inside the piece to be detected, it can be confirmed that the piece to be detected does not leak. That is, it can be confirmed whether the piece to be detected leaks, and thus it is possible to detect the leakage of the piece to be detected.

It can be seen that in the method provided by the embodiment of the present disclosure, since the vacuum environment is first created in the cavity by means of the vacuum generator so that the gas inside the piece to be detected leaks into the cavity; then the clean gas generator is used to deliver clean gas to the cavity, so that the cavity gradually changes from a vacuum environment to a non-vacuum environment; finally, the gas in the cavity is extracted by the leakage detector to detect gas composition in the cavity. In this way, although the leakage of the piece to be detected was occurred in a vacuum environment, the cavity is a non-vacuum environment when the leakage detector is detecting gas composition in the cavity, and the leakage detector can be used in the non-vacuum environment. Therefore, it is possible to enable the leakage detector to detect the leakage of the piece to be detected, improving adaptability of the leakage detector.

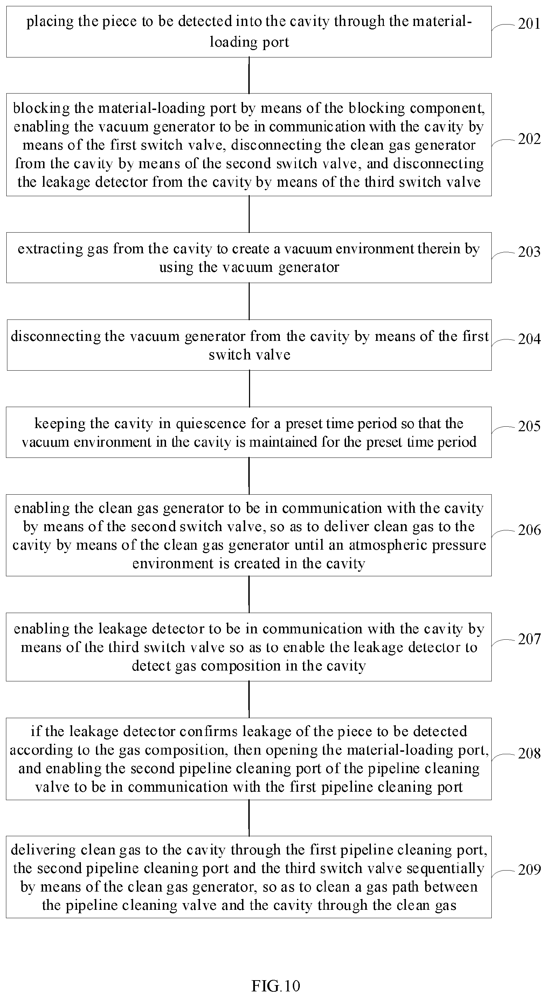

FIG. 10 is a flow diagram of another leakage detecting method provided by an embodiment of the present disclosure.

Referring to FIG. 10, the method may be implemented based on the leakage detecting device of any one in the above first embodiment, and comprise:
Step 201: placing the piece to be detected into the cavity through the material-loading port.

Wherein, the piece to be detected may be placed into the cavity through the material-loading port manually or by mechanical equipment such as a manipulator, which is not limited in the embodiment of the present disclosure.

Step 202: blocking the material-loading port by means of the blocking component, enabling the vacuum generator to be in communication with the cavity by means of the first switch valve, disconnecting the clean gas generator from the cavity by means of the second switch valve, and disconnecting the leakage detector from the cavity by means of the third switch valve.

Here, the sequence of the four processes, that is, blocking the material-loading port by means of the blocking component, enabling the vacuum generator to be in communication with the cavity by means of the first switch valve, disconnecting the clean gas generator from the cavity by means of the second switch valve, and disconnecting the leakage detector from the cavity by means of the third switch valve, may be any possible order, as long as it can be ensured that the material-loading port is in the blocked state, the vacuum generator and the cavity are in communication with each other, and the clean gas generator and the leakage detector are disconnected from the cavity, respectively.

Step 203: extracting gas from the cavity to create a vacuum environment therein by using the vacuum generator.

When the gas in the cavity is extracted by the vacuum generator, the gas in the cavity will gradually decrease, and in turn it is possible to achieve a vacuum-like environment.

Wherein, the vacuum environment mentioned above should be understood in a broad sense, meaning that it only requires the cavity to be roughly in a vacuum state with a low gas pressure so that the gas inside the piece to be detected may leak from the interior of the piece to be detected into the cavity when the piece to be detected is not tightly packaged, which is not limited in the embodiment of the present disclosure.

Step 204: disconnecting the vacuum generator from the cavity by means of the first switch valve.

When the vacuum generator is disconnected from the cavity by means of the first switch valve, the cavity is isolated from the outside, which facilitates the cavity to maintain a vacuum environment.

Step 205: keeping the cavity in quiescence for a preset time period so that the vacuum environment in the cavity is maintained for the preset time period.

On the premise that the cavity is a vacuum environment, the time length that the cavity maintains the vacuum environment may reach the preset time length by standing for the preset time period, that is, such that the cavity undergoes pressure retention for the preset time period. In this way, when the piece to be detected is not packaged tightly, it may be convenient for the gas inside the piece to be detected to sufficiently leak from the interior of the piece to be detected into the cavity.

Here, the preset time may be any value within 10s to 30s, for example, the preset time may be 10s, 20s or 30s, etc. The embodiments of the present disclosure do not limit the preset time.

Step S206: enabling the clean gas generator to be in communication with the cavity by means of the second switch valve, so as to deliver clean gas to the cavity by means of the clean gas generator until a non-vacuum environment is created in the cavity.

When the clean gas is delivered to the cavity by means of the clean gas generator, the gas pressure in the cavity will gradually increase with the input of the clean gas, thereby achieving the purpose of changing the cavity from the vacuum environment to the non-vacuum environment.

Step S207: enabling the leakage detector to be in communication with the cavity by means of the third switch valve so as to enable the leakage detector to detect gas composition in the cavity.

After the leakage detector is in communication with the cavity, the gas in the cavity may be extracted by means of the leakage detector so that the gas in the cavity enters the leakage detector, thereby achieving the purpose of detecting the gas composition in the cavity by means of the leakage detector.

Step S208: if the leakage detector confirms leakage of the piece to be detected according to the gas composition, then opening the material-loading port, and enabling the second pipeline cleaning port of the pipeline cleaning valve to be in communication with the first pipeline cleaning port.

When the leakage detector detects that the leakage of the piece to be detected has occurred, the second pipeline cleaning port and the first pipeline cleaning port of the pipeline cleaning valve may be in communication with each other, and when the second pipeline cleaning port and the first pipeline cleaning port of the pipeline cleaning valve are in communication with each other, the clean gas generator may be in communication with the cavity through the second pipeline cleaning port, the first pipeline cleaning port and the third switch valve, and in addition, by opening the material-loading port, it is possible to enable the cavity to be in communication with the external environment.

Step S209: delivering clean gas to the cavity through the first pipeline cleaning port, the second pipeline cleaning port and the third switch valve sequentially by means of the clean gas generator, so as to clean a gas path between the pipeline cleaning valve and the cavity through the clean gas.

Since the gas leaking from the piece to be detected may remain in the gas path between the pipeline cleaning valve and the cavity when the piece to be detected leaks, if it is not cleaned in time, the detection results will be inaccurate in the next leakage test. Based on this, by delivering the clean gas to the cavity through the first pipeline cleaning port, the second pipeline cleaning port, and the third switch valve sequentially by means of the clean gas generator, it is possible to blow the residual gas into the cavity from the gas path between the pipeline cleaning valve and the cavity and blow it out of the cavity through the material-loading port, thereby achieving the purpose of cleaning the gas path between the pipeline cleaning valve and the cavity, and thus avoiding the occurrence of inaccurate detection results.

In the embodiment of the present disclosure, since a vacuum environment is first created in the cavity by means of the vacuum generator so that the gas inside the piece to be detected leaks into the cavity; then the clean gas generator is used to deliver clean gas to the cavity, so that the cavity gradually changes from a vacuum environment to a non-vacuum environment; finally, the gas in the cavity is extracted by the leakage detector to detect the gas composition in the cavity. In this way, although the leakage of the piece to be detected was occurred in a vacuum environment, the cavity is a non-vacuum environment when the leakage detector is detecting gas composition in the cavity, and the leakage detector can be used in the non-vacuum environment. Therefore, it is possible to enable the leakage detector to detect the leakage of the piece to be detected, improving adaptability of the leakage detector.

In addition, when the leakage detector detects that the leakage of the piece to be detected has occurred, since the clean gas may deliver the clean gas to the cavity through the first pipeline cleaning port, the second pipeline cleaning port, and the third switch valve sequentially, it is possible to blow the residual gas into the cavity from the gas path between the pipeline cleaning valve and the cavity and blow it out of the cavity through the material-loading port, thereby achieving the purpose of cleaning the gas path between the pipeline cleaning valve and the cavity, and thus avoiding inaccuracy of detection results.

Finally, it should be noted that the above embodiments are only used to illustrate the technical solutions of the present disclosure, and are not limited to them; although the present disclosure has been described in detail with reference to the foregoing embodiments, a person of ordinary skill in the art should understand that it may still modify the technical solutions recorded in the foregoing embodiments, or equivalently replace some or all of the technical features; these modifications or substitutions do not make the essence of the corresponding technical solutions out of the scope of the technical solutions of the various embodiments of the present disclosure.

## Claims

1. A leakage detecting device, **characterized by** comprising:
a detecting bin (10) having a cavity (101), the detecting bin (10) being provided thereon with a material-loading port (102) which is in communication with the cavity (101), and the detecting bin (10) being further provided thereon with a blocking component (103) for opening or blocking the material-loading port (102), the material-loading port (102) being configured for enabling a piece to be detected to be placed into the cavity (101) or enabling it to be taken out of the cavity (101);
a vacuum generator (11) being in communication with the cavity (101), a first switch valve (12) being connected between the vacuum generator (11) and the detecting bin (10) and configured for enabling the vacuum generator (11) to be in communication with or disconnect from the cavity (101), the vacuum generator (11) being configured for extracting gas from the cavity (101);
a clean gas generator (13) being in communication with the cavity (101), a second switch valve (14) being connected between the clean gas generator (13) and the detecting bin (10) and configured for enabling the clean gas generator (13) to be in communication with or disconnect from the cavity (101), the clean gas generator (13) being configured for delivering clean gas to the cavity (101); and
a leakage detector (15) being in communication with the cavity (101), a third switch valve (16) being connected between the leakage detector (15) and the detecting bin (10) and configured for enabling the leakage detector (15) to be in communication with or disconnect from the cavity (101), the leakage detector (15) being configured for detecting gas composition in the cavity (101).

2. The leakage detecting device according to claim 1, **characterized by** further comprising:
a pressure detecting element (17) being in communication with the cavity (101) and configured for detecting gas pressure in the cavity (101).

3. The leakage detecting device according to claim 2, **characterized in that** the pressure detecting element (17) is connected between the third switch valve (16) and the detecting bin (10), and is in communication with the third switch valve (16) and the cavity (101) respectively.

4. The leakage detecting device according to any one of claims 1 to 3, **characterized by** further comprising:
a pipeline cleaning valve (18) comprising a first pipeline cleaning port (181), a second pipeline cleaning port (182) and a third pipeline cleaning port (183) being configured for enabling the second pipeline cleaning port (182) to be in communication with the first pipeline cleaning port (181) or the third pipeline cleaning port (183) respectively;
the first pipeline cleaning port (181) is in communication with the clean gas generator (13), the second pipeline cleaning port (182) is in communication with the third switch valve (16), and the third pipeline cleaning port (183) is in communication with the leakage detector (15).

5. The leakage detecting device according to claim 4, **characterized by** further comprising:
a check valve (19) being connected between the first pipeline cleaning port (181) and the clean gas generator (13) and being in communication with the first pipeline cleaning port (181) and the clean gas generator (13) respectively, a flow direction of gas in the check valve (19) being configured as a direction from the clean gas generator (13) to the first pipeline cleaning port (181).

6. The leakage detecting device according to any one of claims 1 to 5, **characterized by** further comprising:
a relay valve (20) being connected between the third switch valve (16) and the pipeline cleaning valve (18) and configured for enabling the third switch valve (16) to be in communication with or disconnect from the second pipeline cleaning port (182).

7. The leakage detecting device according to claim 6, **characterized in that**:
the relay valve (20) comprises a first relay port (201), a second relay port (202), and a third relay port (203), the relay valve (20) is configured for enabling the second relay port (202) to be in communication with the first relay port (201) or the third relay port (203) respectively, and the second relay port (202) is in communication with the second pipeline cleaning port (182);
the leakage detecting device further comprises an instrument cleaning valve (21), the instrument cleaning valve (21) comprises a first instrument cleaning port (211), a second instrument cleaning port (212) and a third instrument cleaning port (213), the instrument cleaning valve (21) is configured for enabling the second instrument cleaning port (212) to be in communication with the first instrument cleaning port (211) or the third instrument cleaning port (213) respectively, the first instrument cleaning port (211) is in communication with the leakage detector (15), the second instrument cleaning port (212) is in communication with the clean gas generator (13), and the third instrument cleaning port (213) is in communication with the third relay port (203).

8. The leakage detecting device according to claim 7, **characterized in that** the first instrument cleaning port (211) is further in communication with the third pipeline cleaning port (183).

9. The leakage detecting device according to claim 7, **characterized in that** an electric proportional valve (22) is in communication with the clean gas generator (13) and the second instrument cleaning port (212) and is connected therebetween.

10. The leakage detecting device according to any one of claims 1 to 9, **characterized in that** an electric proportional valve (22) is connected between the second switch valve (14) and the clean gas generator (13).

11. A leakage detecting method implemented based on the leakage detecting device according to any one of claims 1 to 10, **characterized by** comprising:
placing the piece to be detected into the cavity through the material-loading port;
blocking the material-loading port by means of the blocking component, enabling the vacuum generator to be in communication with the cavity by means of the first switch valve, disconnecting the clean gas generator from the cavity by means of the second switch valve, and disconnecting the leakage detector from the cavity by means of the third switch valve;
extracting gas from the cavity to create a vacuum environment therein by using the vacuum generator;
disconnecting the vacuum generator from the cavity by means of the first switch valve, and enabling the clean gas generator to be in communication with the cavity by means of the second switch valve, so as to deliver clean gas to the cavity by means of the clean gas generator until a non-vacuum environment is created in the cavity; and
enabling the leakage detector to be in communication with the cavity by means of the third switch valve so as to enable the leakage detector to detect gas composition in the cavity.

12. The leakage detecting method according to claim 11, **characterized in that** after said "disconnecting the vacuum generator from the cavity by means of the first switch valve", and before said "enabling the clean gas generator to be in communication with the cavity by means of the second switch valve", the method further comprises:
keeping the cavity in quiescence for a preset time period so that the vacuum environment in the cavity is maintained for the preset time period.

13. The leakage detecting method according to claim 11 or 12, **characterized in that** after said "enabling the leakage detector to be in communication with the cavity by means of the third switch valve so as to enable the leakage detector to detect gas composition in the cavity", the method further comprises:
if the leakage detector confirms leakage of the piece to be detected according to the gas composition, then opening the material-loading port, and enabling the second pipeline cleaning port of the pipeline cleaning valve to be in communication with the first pipeline cleaning port; and
delivering clean gas to the cavity through the first pipeline cleaning port, the second pipeline cleaning port and the third switch valve sequentially by means of the clean gas generator, so as to clean a gas path between the pipeline cleaning valve and the cavity through the clean gas.
